# EUROPEAN PATENT APPLICATION

(11) **EP 4 817 767 A1**
(43) Date of publication of application: **07.10.2026**
(21) Application number: 25168235.7
(22) Date of filing: 03.04.2025
(51) Int. Cl.: B23B 29/04, B23B 31/107, B23B 31/20

(54) **CUTTING TOOL WITH REPLACEABLE TOOL HEAD STRUCTURE**

(71) Applicant: Chang, Hsin-Tien, Taichung City 411 (TW)
(72) Inventor: Chang, Hsin-Tien, Taichung City 411 (TW)
(74) Representative: Viering, Jentschura & Partner mbB Patent- und Rechtsanwälte

(57) **Abstract**

A cutting tool with a replaceable tool head structure comprises a tool holder (10) and a tool head (20) that are locked by a screw (30). One end face of the tool holder (10) has a polygonal positioning hole (11) extending inward. The bottom of the positioning hole (11) has two symmetrical positioning grooves (111) in a V shape, providing a quick position function. The tool head (20) includes a polygonal positioning shaft (22) on one end thereof. The bottom of the positioning shaft (22) has two symmetrical positioning seats (221) in a V shape.

## Description

### BACKGROUND OF THE INVENTION

### 1. Technical Field

The present invention relates to an improved structure of a cutting tool, and more particularly to a cutting tool with a replaceable tool head structure, ensuring a stable locking mechanism between a tool head and a tool holder, high-precision positioning, and excellent torsional rigidity.

### 2. Description of Related Art

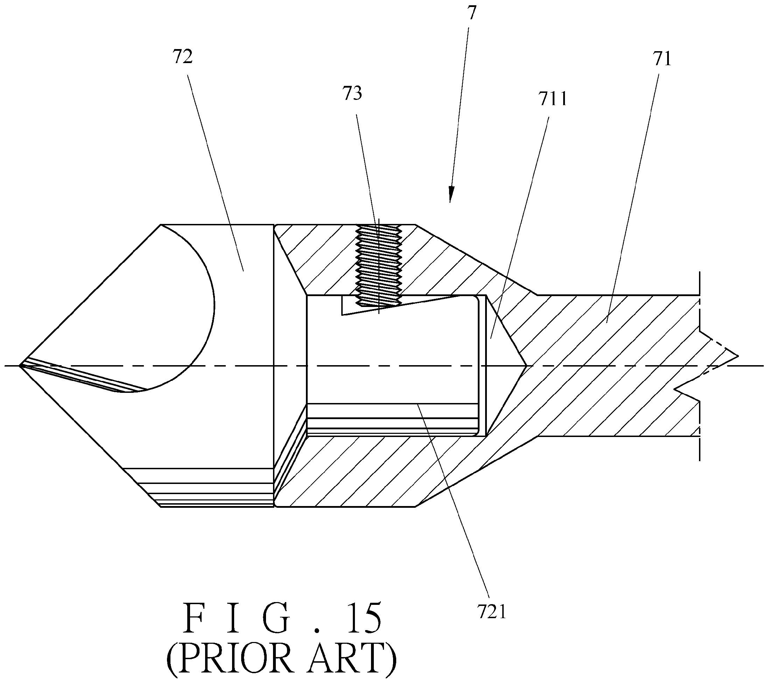

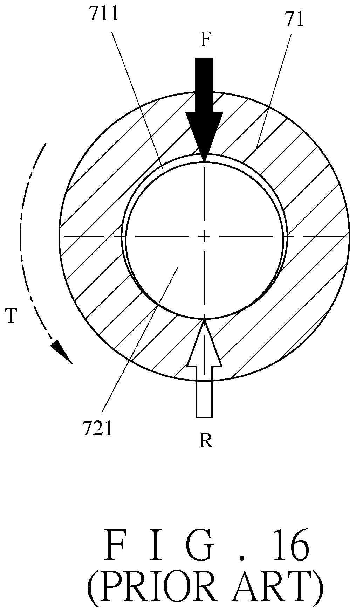

A conventional cutting tool, in particular a cutting tool having a detachable tool head, can be replaced with different cutting inserts for cutting operations. As shown in FIG. 15, a replaceable chamfering tool 7 comprises a shank 71 and a tool head 72. One end of the tool head 72 has an insert portion 721 that can be inserted into a receiving groove 711 of the shank 71. A locking member 73 is configured for positioning the tool head 72 in the receiving groove 711 of the shank 71. Both the insert portion 721 and the receiving groove 711 are designed to be circular. FIG. 16 is a schematic view of the combination of the insert portion 721 and the receiving groove 711, wherein the clearance between the combination of the insert portion 721 and the receiving groove 711 is deliberately enlarged. When the locking member 73 is pressed against the insertion portion 721, a locking force F is generated on the insertion portion 721, as shown by the solid arrow, and a corresponding reaction force R is generated on the corresponding surfaces at the combined contact position between the insertion portion 721 and the receiving groove 711, as shown by the hollow arrow. Since the locking force F is applied to the insertion portion 721, the clearance between the insertion portion 721 and the receiving groove 711 is on the side of the locking force F. When the locking member 73 applies the locking force F to secure the insertion portion 721, the clearance may cause a slight angular deflection of the insertion portion 721, resulting in an error in the assembly accuracy of the insertion portion 721 and the receiving groove 711. Furthermore, there is only one set of the corresponding locking force F and the reaction force R to lock the insertion portion 721, which is not strong enough. When the cutting tool is subjected to a cutting force, a twisting torque T is generated on the insertion portion 721. When the torque T is greater than the locking force F, the insertion portion 721 will rotate and slide, affecting the cutting accuracy and service life of the cutting tool. The disadvantage of rotational slippage is often solved by increasing the number of locking elements, but this cannot improve the assembly accuracy of the insertion portion 721 and the receiving groove 711.

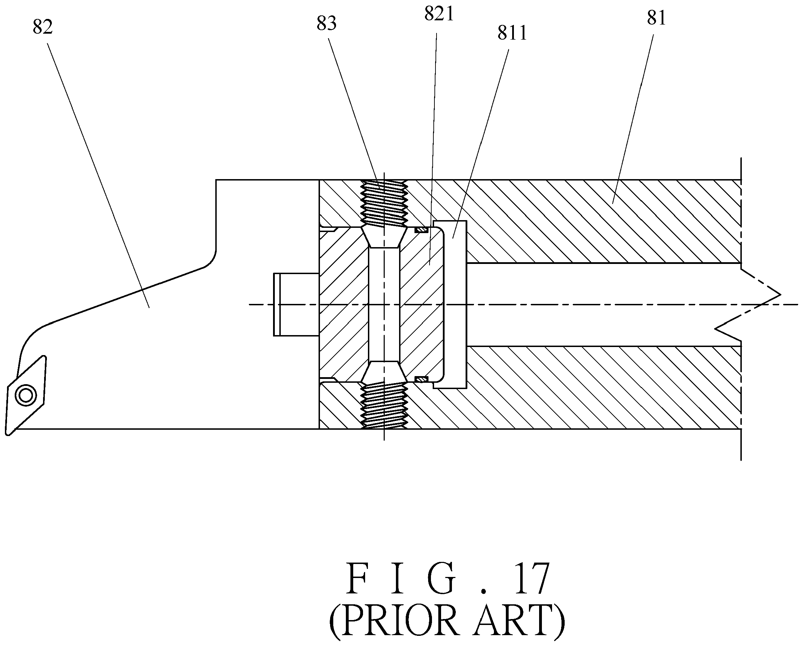

FIG. 17 shows a combined turning tool, including a tool holder 81, a tool seat 82 and at least one fastener 83. One end face of the tool holder 81 has a receiving groove 811 extending inward. The tool seat 82 includes an insert shaft 821 that extends axially and is inserted into the receiving groove 811 and locked by the fastener 83. Both the insert shaft 821 and the receiving groove 811 are designed to be circular. The situation caused by the assembly structure is the same as that of the detachable chamfering cutter 7 (as shown in FIG. 15 and FIG. 16). There is only one set of the corresponding locking force F and the reaction force R to lock the insertion shaft 821, which has the disadvantages of insufficient locking force and poor assembly stability.

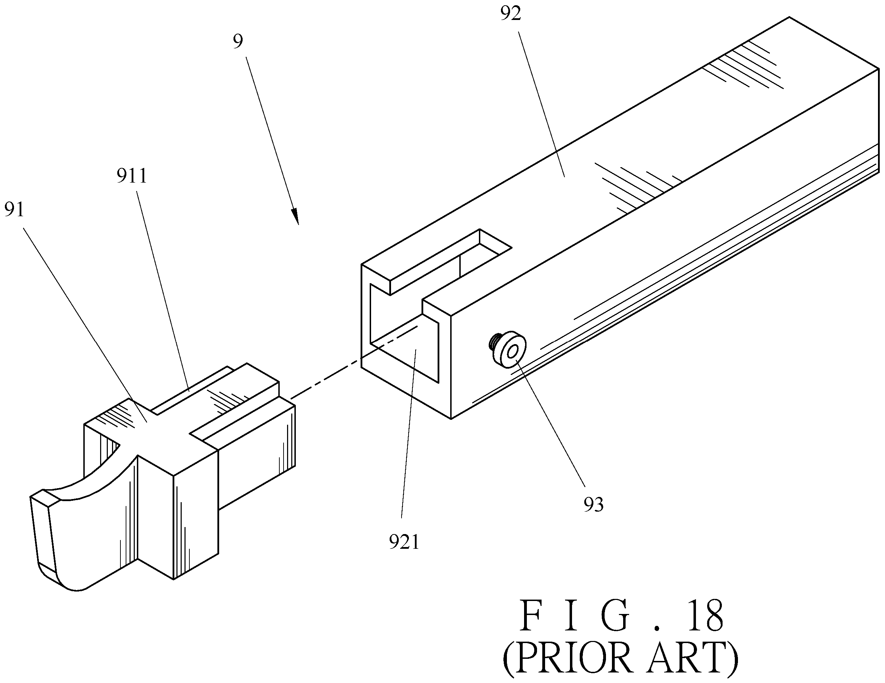

FIG. 18 shows a turning tool replacement device 9, comprising a front tool holder 91, a rear tool holder 92 and a screw 93. The rear end of the front tool holder 91 is machined into a square with a protruding slide rail 911. The front end of the rear tool holder 92 has a slide groove 921 extending inward and corresponding in shape to the slide rail 911. The connection structure of the turning tool is designed in a square shape, which has better torsional strength. However, when they are assembled and tightened by the screw 93, the coaxial locking force F and the reaction force R are generated, same as those shown in FIG. 16. The locking force F and the reaction force R correspond to each other, and the locking force is limited. During heavy cutting operations, the assembly clearance in the connection structure may pose a risk of vibration.

Referring to FIG. 16, the assembly structure of the circular connection has a high assembly precision error. When the screw is locked, there is only one set of the locking force F and the reaction force R. The locking force is not strong enough and the torsion resistance is poor. The square connection structure has better torsional strength, but when it is tightened by the screw after assembly, it generates coaxial locking force and reaction force. The locking force F and the reaction force R correspond to each other, and the locking force is limited. During heavy cutting operations, the assembly clearance in the connection structure may pose a risk of vibration.

### SUMMARY OF THE INVENTION

In view of the foregoing shortcomings, the primary object of the present invention is to provide a cutting tool with a replaceable tool head structure, comprising:
a tool holder, one end face of the tool holder having a positioning hole extending inward, the positioning hole being in a polygonal shape, a bottom of the positioning hole having two symmetrical positioning grooves in a V shape, the positioning hole having two symmetrical upright edges on two sides of a middle section thereof and a horizontal upper flat edge on a top thereof, the tool holder further having an accommodating hole that is located behind the positioning hole and communicates with the positioning hole, the top of the tool holder being formed with a screw hole passing through the upper flat edge;
a tool head, including a positioning shaft on one end thereof, the positioning shaft being in a polygonal shape, a bottom of the positioning shaft having two symmetrical positioning seats in a V shape, the positioning shaft having two symmetrical upright surfaces on two sides of a middle section thereof, a horizontal force-bearing surface on a top thereof, and a horizontal flat surface on the bottom, a rear end of the positioning shaft being connected to a bending-resistant shaft, the force-bearing surface being formed with a tapered hole;
a screw, having a conical head on a front end thereof.

In the present invention, both the positioning hole of the tool holder and the positioning shaft of the tool head are in a polygonal shape. The shapes of the two are corresponding and have a precise combination tolerance. The polygonal shape restricts the rotational freedom of the tool head and the tool holder. In addition, the polygonal shape has better resistance to torsional stress and shear stress. When the screw tightens the positioning shaft of the tool head, the screw generates a locking force on the positioning shaft, and a corresponding reaction force is generated on the flat surface and the V-shaped positioning seats of the bottom of the positioning shaft, thereby forming a concurrent force system, which ensures a stable locking force on the tool head and enhances the rigidity of the assembly.

### BRIEF DESCRIPTION OF THE DRAWINGS

FIG. 1 is an exploded view according to a first embodiment of the present invention;
FIG. 2 is a front view of the tool holder according to the first embodiment of the present invention;
FIG. 3 is a rear view of the tool holder according to the first embodiment of the present invention;
FIG. 4 is a cross-sectional view according to the first embodiment of the present invention;
FIG. 5 is a sectional view taken along line V-V of FIG. 4;
FIG. 6 is a schematic view showing the forces acting on the positioning shaft of the tool head when the tool head is locked by the screw according to the first embodiment of the present invention;
FIG. 7 is a schematic view showing the forces acting on the circular positioning shaft of the tool head when the tool head is received in another implementation of the positioning hole of the tool holder and locked by the screw according to the first embodiment of the present invention;
FIG. 8 is a cross-sectional view according to a second embodiment of the present invention, illustrating the assembly of the collet chunk and the ER tool holder;
FIG. 9 is a front view of the ER tool holder in FIG. 8;
FIG. 10 is a perspective view of the tool length positioning rod according to a third embodiment of the present invention;
FIG. 11 is a cross-sectional view of the tool length positioning rod according to the third embodiment of the present invention;
FIG. 12 is a cross-sectional view according to the third embodiment of the present invention, illustrating the assembly of the tool length positioning rod, the collet chunk and the ER tool holder;
FIG. 13 is an application example of FIG. 12 for installing a cutting tool and positioning the tool length;
FIG. 14 is a schematic view according to the third embodiment of the present invention, illustrating that the cooling liquid sprays from the interior of the ER tool holder toward the cutting tool;
FIG. 15 is a partial cross-sectional view of a conventional replaceable chamfering tool;
FIG. 16 is a schematic view showing that the assembled portion of a conventional tool shank and a tool head is subjected to the locking force of a screw;
FIG. 17 is a partial cross-sectional view of a conventional turning tool; and
FIG. 18 is a perspective view of a conventional assembled turning tool having a square connecting structure.

### DETAILED DESCRIPTION OF THE INVENTION

Embodiments of the present invention will now be described, by way of example only, with reference to the accompanying drawings.

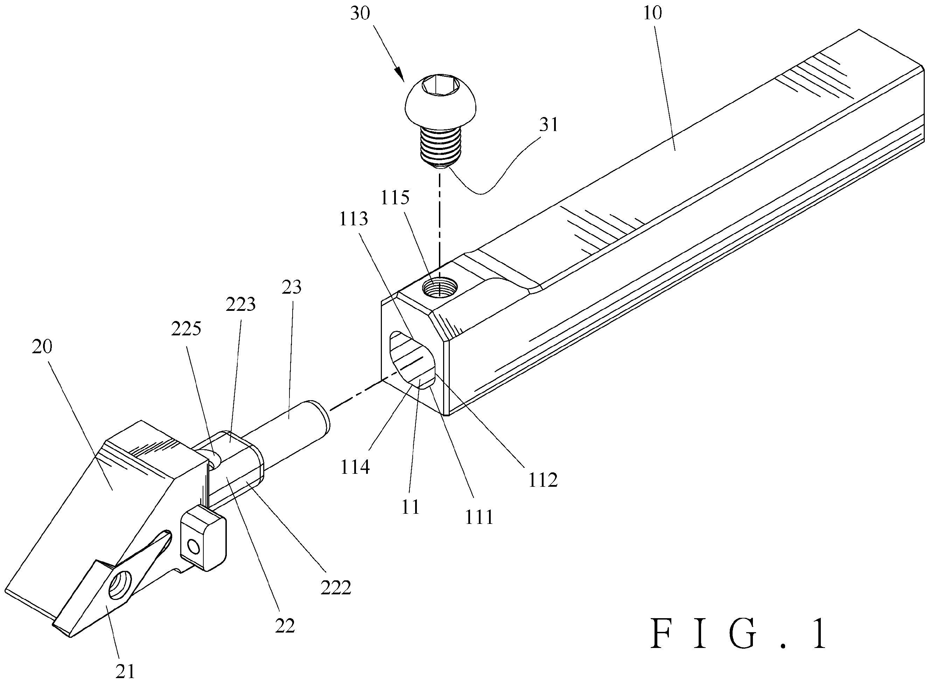

As shown in FIG. 1 through FIG. 4, a cutting tool with a replaceable tool head structure of the present invention, comprising a tool holder 10, a tool head 20, and a screw 30.

One end face of the tool holder 10 has a positioning hole 11 extending inward. The positioning hole 11 is in a polygonal shape. The bottom of the positioning hole 11 has two symmetrical positioning grooves 111 in a V shape. The positioning hole 11 has two symmetrical upright edges 112 on two sides of a middle section thereof, a horizontal upper flat edge 113 on the top, and a horizontal lower flat edge 114 on the bottom. The tool holder 10 further has an accommodating hole 12 that is located behind the positioning hole 11 and communicates with the positioning hole 11 and a water hole 13 that is located behind the accommodating hole 12 and communicates with the accommodating hole 12. The top of the tool holder 10 is formed with a screw hole 115 passing through the upper flat edge 113 of the positioning hole 11.

The tool head 20 includes a cutting insert 21 locked on one end thereof and a positioning shaft 22 on another end thereof. The positioning shaft 22 corresponds in shape to the positioning hole 11. The positioning shaft 22 is in a polygonal shape. The bottom of the positioning shaft 22 has two symmetrical positioning seats 221 in a V shape. The positioning shaft 22 has two symmetrical upright surfaces 222 on two sides of a middle section thereof, a horizontal force-bearing surface 223 on the top, and a horizontal flat surface 224 on the bottom. The rear end of the positioning shaft 22 is connected to a bending-resistant shaft 23. The force-bearing surface 223 of the positioning shaft 22 is formed with a tapered hole 225.

The front end of the screw 30 has a conical head 31 corresponding in shape to the tapered hole 225 of the tool head 20.

A tapered hole center axis 226 of the tapered hole 225 and a screw hole center axis 116 of the screw hole 115 of the tool holder 10 are slightly offset. The tapered hole center axis 226 is located slightly in front of the screw hole center axis 116, so that when the screw 30 is tightened, it generates an inward tightening effect on the tool head 20.

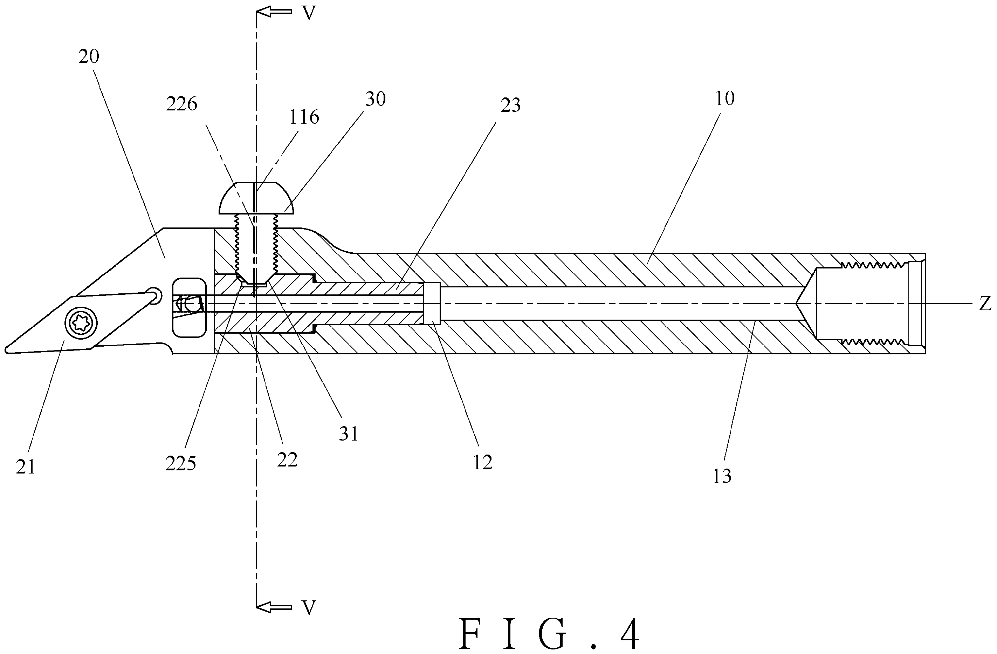

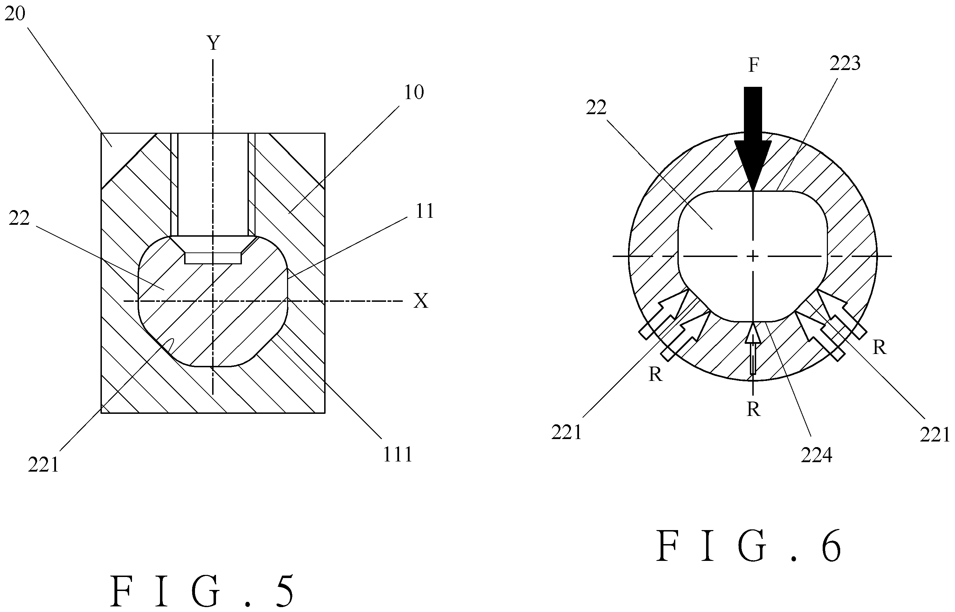

Referring to FIG. 4 and FIG. 5, the positioning shaft 22 of the tool head 20 is inserted into the positioning hole 11 of the tool holder 10. The bottom of the positioning hole 11 has the two symmetrical positioning grooves 111 in a V shape. The V-shaped positioning grooves 111 have constraints in both the X-axis and Y-axis directions, providing stable, fast, and precise positioning functionality. Besides, the positioning shaft 22 is also in a polygonal shape. The bottom of the positioning shaft 22 has the two symmetrical positioning seats 221 in a V shape. Once the positioning seats 221 are inserted in the positioning grooves 111, the tool head 20 is immediately, accurately positioned, and the tip of the cutting insert 21 is immediately, accurately positioned.

The constraint of the tool head 20 in the Z-axis direction is mainly achieved by the tightening effect of the screw 30. Referring to FIG. 1 through FIG. 4, because the tapered hole center axis 226 of the tapered hole 225 and the screw hole center axis 116 of the screw hole 115 of the tool holder 10 are slightly offset, when the conical head 31 on the front end of the screw 30 pushes against the tapered hole 225 to generate inward and downward forces, the tool head 20 is gradually tightened to the end face of the tool holder 10, thereby creating a constraining and locking effect in the Z-axis direction.

The bending-resistant shaft 23 primarily functions to enhance the bending resistance of the too head 20. The bending-resistant shaft 23 is inserted into the accommodating hole 12 of the tool holder 10, so that the length of the tool head 20 extending into the tool holder 10 is increased. When the tool head 20 performs cutting, the proportion of the supported length increases, thereby enhancing the rigidity of the tool head 20, increasing the stress dispersion area, and improving the ability of the tool head 20 to withstand cutting torque effectively.

In the present invention, the positioning hole 11 of the tool holder 10 is in a polygonal shape. In this embodiment, the positioning hole 11 is a hexagonal hole. The positioning shaft 22 of the tool head 20 is also in a polygonal shape. The shapes of the two are corresponding and have a precise combination tolerance. The polygonal shape restricts the rotational freedom of the tool head 20 and the tool holder 10. In addition, the polygonal shape has better resistance to torsional stress and shear stress. Through the V-shaped the positioning seats 221 and the V-shaped positioning grooves 111, the tool head 20 can be positioned stably, fast and accurately, and the position of the tip of the cutting insert 21 can be positioned accurately, without recalibrating the position of the tip of the cutting insert 21.

Referring to FIG. 4 through FIG. 6, when the screw 30 tightens the positioning shaft 22 of the tool head 20, the screw 30 generates a locking force F on the force-bearing surface 223 of the positioning shaft 22, as indicated by the solid arrow, and a corresponding reaction force R is generated on the flat surface 224 and the V-shaped positioning seats 221, as indicated by the hollow arrow, thereby forming a concurrent force system, which ensures a highly secure locking force on the tool head 20 and enhances the rigidity of the assembly.

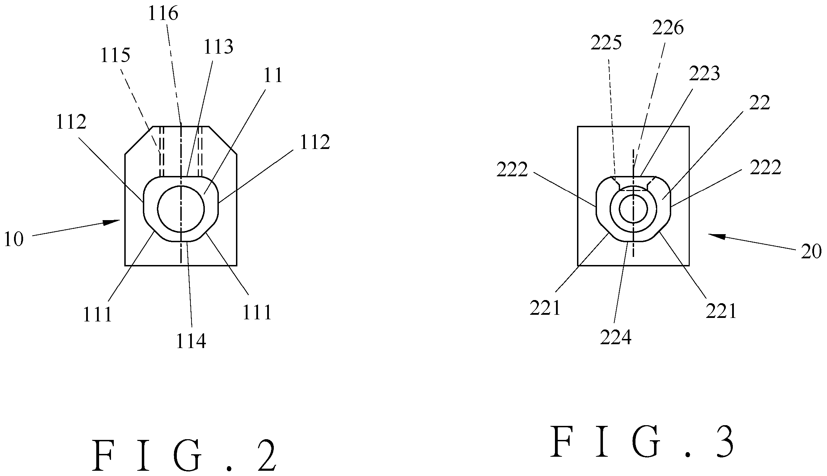

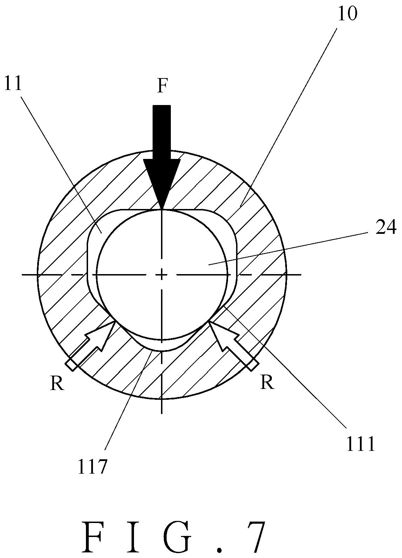

FIG. 7 illustrates another implementation of the positioning hole 11 of the tool holder 10 of the present invention. The bottom of the positioning hole 11 has a curved edge 117, instead of the lower flat edge 114 shown in FIG. 2. Thus, the cylindrical positioning shaft 24 is secured by the concurrent force system formed by the screw 30 and the positioning grooves 111. The cylindrical positioning shaft 24 can be positioned quickly and accurately while ensuring stable locking through the concurrent force system of three forces. The screw 30 is shown in FIG. 1.

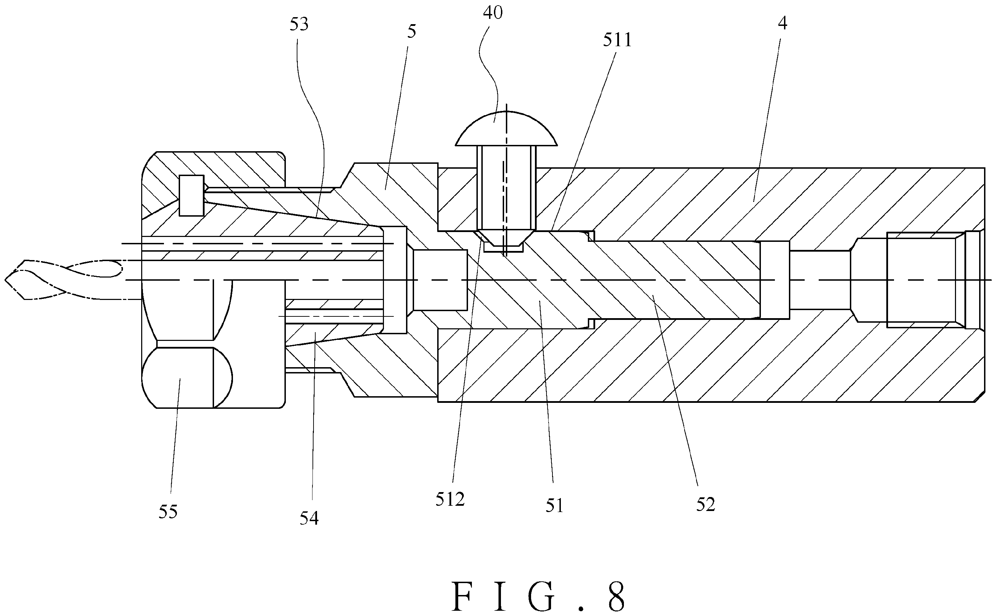

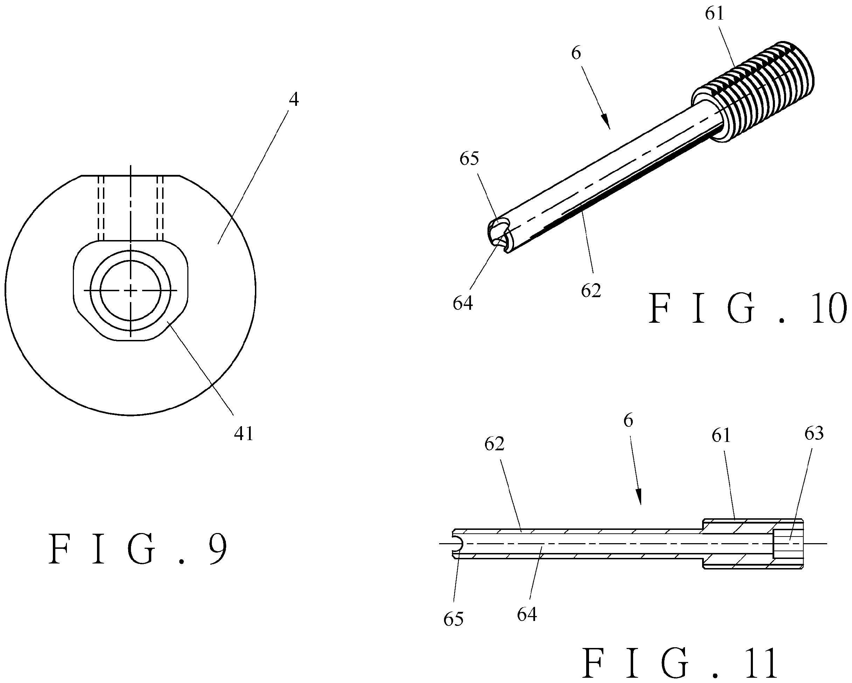

The above-mentioned embodiment of the present invention is a combination of a tool head and a tool holder for a turning tool. In addition to turning tools, it can be applied to a cutting tool (such as ER cutting tool) clamped by a spring collet. As shown in FIG. 8 and FIG. 9, the positioning hole 41 defined in the front end of the ER tool holder 4 is in a polygonal shape. A collet chuck 5 is inserted in the positioning hole 41 and locked by a screw 40. One end of the collet chuck 5 has a positioning shaft 51. The positioning shaft 51 is in a polygonal shape. The rear end of the positioning shaft 51 is connected to a bending-resistant shaft 52. A force-bearing surface 511 of the positioning shaft 51 is formed with a tapered hole 512. The end face of the collet chuck 5 has another tapered hole 53. A spring collet 54 is inserted into the tapered hoe 53 and locked by a nut 55. The spring collet 54 is configured for holding cutting tools with round shanks, such as drill bits, center drills, milling cutters, thread cutters, etc.

The collet chuck 5 does not have a cooling liquid hole and requires an external cooling means for chip flushing, chip removal, and temperature reduction of the workpiece and the cutting tool. However, the external cooling means is not effective. Especially for deep blind hole cutting, chip removal and temperature reduction are difficult. The cutting edge is easy to heat up, reducing machining efficiency, and the chips are easy to friction with the cutting tool and the surface of the workpiece, reducing the machining accuracy.

In addition, because the cutting tools used in NC machining centers are different in length, each cutting tool needs to be calibrated to ensure the correct machining depth, so as to avoid collision or idle during machining. The most commonly used tool length calibration device is the Z-axis setter. However, the operator may input a wrong value after measurement, which may lead to tool collision or idle running. When replacing a cutting tool due to dulling, the insertion length of the cutting tool in the tool holder varies. Therefore, tool length calibration is required for each replacement.

As shown in FIG. 10 and FIG. 11, the present invention further comprises a tool length positioning rod 6. The tool length positioning rod 6 includes a screw head 61. The tool length positioning rod 6 further includes a positioning post 62 on a front end thereof. A drive hole 63 is defined in one end of the screw head 61. The drive hole 63 is in a hexagonal shape. A water hole 64 passes through the tool length positioning rod 6. A side aperture 65 is disposed on a distal end of the positioning post 62. The side aperture 65 passes through a distal end of the water hole 64.

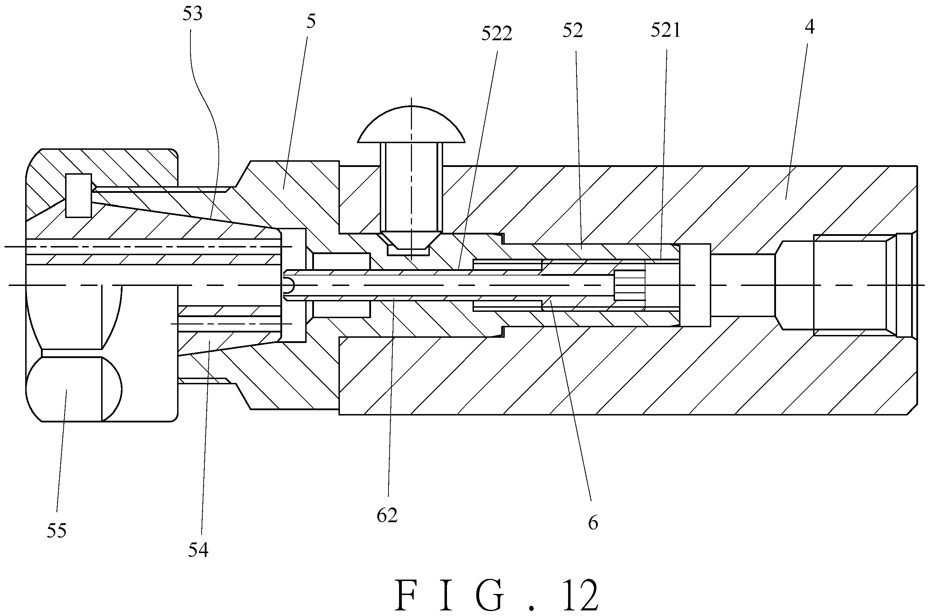

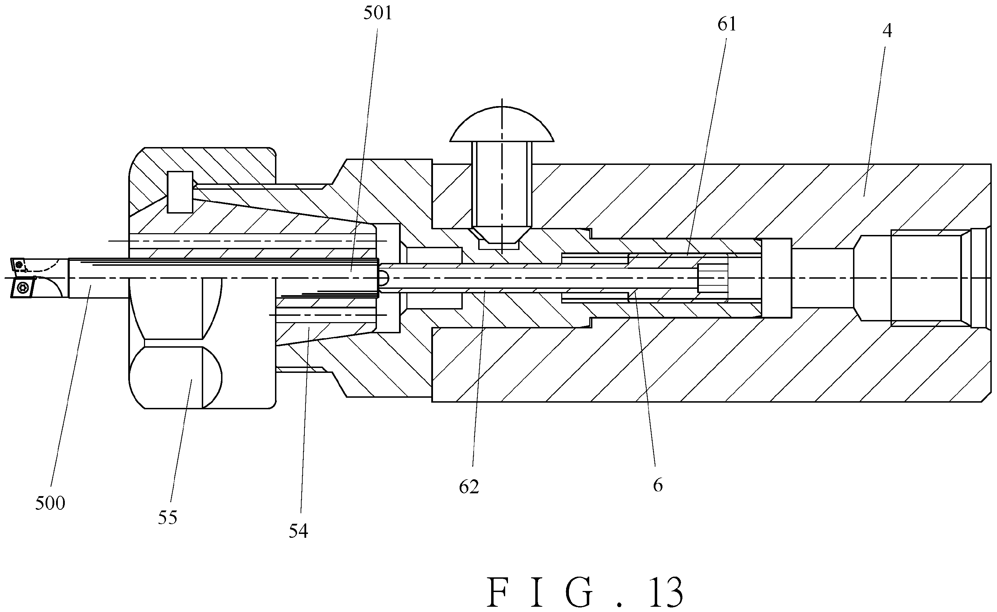

Referring to FIG. 12, the bending-resistant shaft 52 of the collet chuck 5 has an inner screw hole 521 in a rear end thereof and another accommodating hole 522 in front of the inner screw hole 521. The accommodating hole 522 communicates with the tapered hole 53. The accommodating hole 522 is configured for insertion of the positioning post 62. The collet chuck 5 is secured to the front end of the ER tool holder 4. The tool length positioning rod 6 of the present invention is screwed into the inner screw hole 521 in the rear end of the bending-resistant shaft 52. The front end of the positioning post 62 of the tool length positioning rod 6 is close to the rear end of the spring collet 54. The tool length positioning rod 6 can be rotated forward or backward to change the position of the front end of the positioning post 62. Referring to FIG. 13, a cutting tool 500 is inserted in the spring collet 54 and locked by the nut 55.

As shown in FIG. 11 and FIG. 13, the screw head 61 of the tool length positioning rod 6 is coated with anaerobic adhesive and rotated for the front end of the positioning post 62 to lean against the shank 501 of the cutting tool 500 (as shown in FIG. 13). After the anaerobic adhesive is dried, the position of the tool length positioning rod 6 is fixed, and thus the position of the cutting tool 500 is fixed. Whenever a cutting tool 500 of the same size and length is replaced or the disposable cutting insert of a cutting tool is replaced, the cutting tool 500 is mounted to the ER tool holder 4 by placing the shank 501 of the cutting tool 500 against the front end of the positioning post 62. The length and position of the cutting tool 500 will then be fixed and constrained. Therefore, there is no need to use the Z-axis setter to calibrate the tool length, which saves the time to calibrate the tool length and prevents the cutting tool from idling or colliding due to the input of incorrect data during the calibration of the tool length.

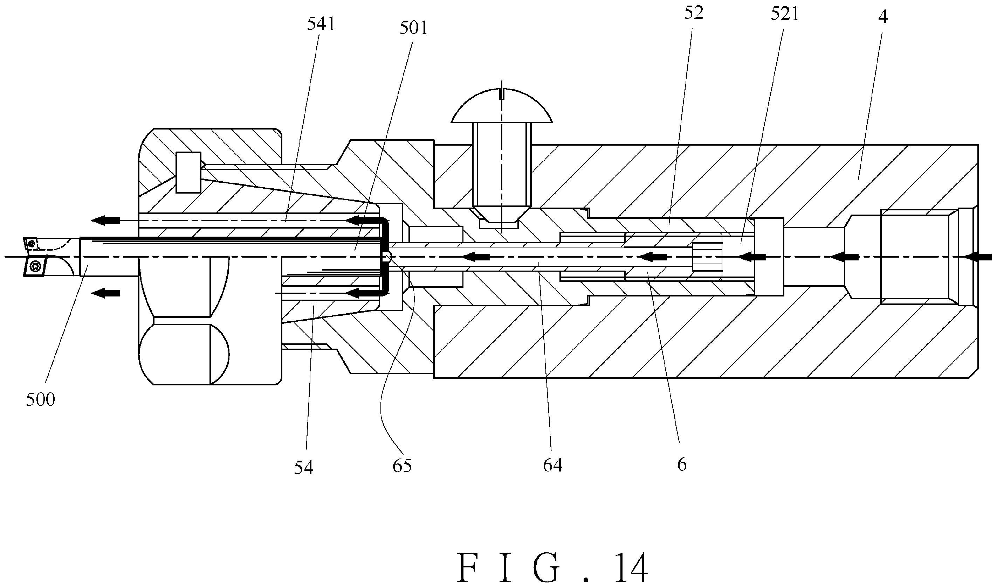

As shown in FIG. 14, the cooling liquid is injected from the rear end of the ER tool holder 4 (as shown by the arrow in the figure) and enters the interior of the tool length positioning rod 6 via the screw hole 521 in the rear end of the bending-resistant shaft 52. The cooling liquid flows out from the side aperture 65 at the end of the water hole 64 to both sides, and then flows into a spray hole 541 of the spring collet 54, and finally flows out from the end of the spray hole 541 and sprays toward the cutting tool 500, such that the cutting edge of the cutting tool 500 and the workpiece are cooled by the cooling liquid and the chips are taken away. Besides, since the cooling liquid flows out from the interior of the ER tool holder 4, the ER tool holder 4 and the spring collet 54 are cooled first, and the shank 501 of the cutting tool 500 is also cooled. Thus, the cutting tool 500 will not transfer heat to the ER tool holder 4 during cutting, so that the ER tool holder will not be affected by heat expansion and cold contraction, and the cutting accuracy will not be affected.

Referring to FIG. 1, FIG. 3 and FIG. 13, because the positioning hole 11 of the tool holder 10 and the positioning shaft 22 of the tool head 20 are in a polygonal shape, the polygonal shape restricts the rotational freedom of the tool head 20 and the tool holder 10, having better resistance to torsional stress and shear stress. The V-shaped positioning seats 221 provide a precise repeated positioning function and a stable locking effect on the locking force of the tool head 20. The tool head 20 may be designed to have different configurations according to different cutting tools 500, such as a round rod-shaped cutting tool or a milling cutter, a drill bit, a turning tool, etc. with a disposable cutting insert. Besides, after the anaerobic adhesive is dried, the position of the tool length positioning rod 6 is fixed, and thus the position of the cutting tool 500 is fixed and constrained. Therefore, there is no need to use a Z-axis setter to recalibrate the tool length, which saves the time on tool length calibration and eliminates the need to train tool-replacement personnel, thereby saving tool replacement time and improving cutting efficiency and other innovative benefits.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A cutting tool with a replaceable tool head structure, comprising:
a tool holder (10), one end face of the tool holder (10) having a positioning hole (11) extending inward, the positioning hole (11) being in a polygonal shape, a bottom of the positioning hole (11) having two symmetrical positioning grooves (111) in a V shape, the positioning hole (11) having two symmetrical upright edges (112) on two sides of a middle section thereof and a horizontal upper flat edge (113) on a top thereof, the top of the tool holder (10) being formed with a screw hole (115) passing through the upper flat edge (113);
a tool head (20), including a positioning shaft (22) on one end thereof, the positioning shaft (22) being in a polygonal shape, a bottom of the positioning shaft (22) having two symmetrical positioning seats (221) in a V shape, the positioning shaft (22) having two symmetrical upright surfaces (222) on two sides of a middle section thereof, a horizontal force-bearing surface (223) on a top thereof, and a horizontal flat surface (224) on the bottom, the force-bearing surface (223) being formed with a tapered hole (225);
a screw (30), having a conical head (31) on a front end thereof.

2. The cutting tool as claimed in claim 1, wherein the bottom of the positioning hole (11) further has a curved edge (117).

3. The cutting tool as claimed in claim 1, wherein the bottom of the positioning hole (11) further has a horizontal lower flat edge (114).

4. The cutting tool as claimed in claim 1, wherein the tool holder (10) further having an accommodating hole (12) that is located behind the positioning hole (11) and communicates with the positioning hole (11), a rear end of the positioning shaft (22) is connected to a bending-resistant shaft (23), and the accommodating hole (12) is configured for accommodating the bending-resistant shaft (23).

5. A cutting tool with a replaceable tool head structure, comprising:
a collet chuck (5), one end face of the collet chuck (5) having a tapered hole (53), a spring collet (54) being disposed in the tapered hoe (53) and locked by a nut (55), one end of the collet chuck (5) having a positioning shaft (51), the positioning shaft (51) being in a polygonal shape, a rear end of the positioning shaft (51) being connected to a bending-resistant shaft (52), the positioning shaft (51) having a force-bearing surface (511) formed with another tapered hole (512) and being locked by a screw (40).

6. The cutting tool as claimed in claim 5, wherein the bending-resistant shaft (52) of the collet chuck (5) has an inner screw hole (521) in a rear end thereof and an accommodating hole (522) in front of the inner screw hole (521), and the accommodating hole (522) communicates with the tapered hole (53).

7. The cutting tool as claimed in claim 6, further comprising a tool length positioning rod (6) screwed in the inner screw hole (521) of the bending-resistant shaft (52), the tool length positioning rod (6) including a screw head (61), the tool length positioning rod (6) further including a positioning post (62) on a front end thereof, a drive hole (63) being defined in one end of the screw head (61), the drive hole (63) being in a hexagonal shape, a water hole (64) passing through the tool length positioning rod (6), a side aperture (65) being disposed on a distal end of the positioning post (62), the side aperture (65) passing through a distal end of the water hole (64).

## Amended claims

### Amended claims in accordance with Rule 137(2) EPC.

1. A cutting tool with a replaceable tool head structure, comprising:
a tool holder (10), one end face of the tool holder (10) having a positioning hole (11) extending inward, the positioning hole (11) being in a polygonal shape, a bottom of the positioning hole (11) having two symmetrical positioning surfaces (111) in a V shape, the bottom of the positioning hole (11) further having a curved edge (117) or a horizontal lower flat edge (114) connected between the two positioning surfaces (111), the positioning hole (11) having two symmetrical upright edges (112) on two sides of a middle section thereof and a horizontal upper flat edge (113) on a top thereof, the curved edge (117) or the horizontal lower flat edge (114) having a length shorter than that of the upper flat edge (113), the top of the tool holder (10) being formed with a screw hole (115) passing through the upper flat edge (113);
a tool head (20), including a positioning shaft (22) on one end thereof, the positioning shaft (22) being in a polygonal shape, a bottom of the positioning shaft (22) having two symmetrical positioning seats (221) in a V shape, the bottom of the positioning shaft (22) further having a horizontal flat surface (224) connected between the two positioning seats (221), the positioning shaft (22) having two symmetrical upright surfaces (222) on two sides of a middle section thereof and a horizontal force-bearing surface (223) on a top thereof, the flat surface (224) having a length shorter than that of the force-bearing surface (223), the force-bearing surface (223) being formed with a tapered hole (225);
a screw (30), having a conical head (31) on a front end thereof.

2. The cutting tool as claimed in claim 1, wherein the tool holder (10) further having an accommodating hole (12) that is located behind the positioning hole (11) and communicates with the positioning hole (11), a rear end of the positioning shaft (22) is connected to a bending-resistant shaft (23), and the accommodating hole (12) is configured for accommodating the bending-resistant shaft (23).

3. A cutting tool with a replaceable tool head structure, comprising:
a collet chuck (5),
one end face of the collet chuck (5) having a tapered hole (53), a spring collet (54) being disposed in the tapered hoe (53) and locked by a nut (55),
one end of the collet chuck (5) having a positioning shaft (51), the positioning shaft (51) being in a polygonal shape,
a rear end of the positioning shaft (51) being connected to a bending-resistant shaft (52),
a bottom of the positioning shaft (51) having two symmetrical positioning seats in a V shape, the bottom of the positioning shaft (51) further having a horizontal flat surface connected between the two positioning seats, the positioning shaft (51) having two symmetrical upright surfaces on two sides of a middle section thereof and a horizontal force-bearing surface (511) on a top thereof, the flat surface having a length shorter than that of the force-bearing surface (511), the force-bearing surface (511) being formed with another tapered hole (512) and being locked by a screw (40).

4. The cutting tool as claimed in claim 3, wherein the bending-resistant shaft (52) of the collet chuck (5) has an inner screw hole (521) in a rear end thereof and an accommodating hole (522) in front of the inner screw hole (521), and the accommodating hole (522) communicates with the tapered hole (53).

5. The cutting tool as claimed in claim 4, further comprising a tool length positioning rod (6) screwed in the inner screw hole (521) of the bending-resistant shaft (52), the tool length positioning rod (6) including a screw head (61), the tool length positioning rod (6) further including a positioning post (62) on a front end thereof, a drive hole (63) being defined in one end of the screw head (61), the drive hole (63) being in a hexagonal shape, a water hole (64) passing through the tool length positioning rod (6), a side aperture (65) being disposed on a distal end of the positioning post (62), the side aperture (65) passing through a distal end of the water hole (64).
